# EUROPEAN PATENT APPLICATION

(11) **EP 4 425 614 A1**
(43) Date of publication of application: **04.09.2024**
(21) Application number: 22885770.2
(22) Date of filing: 19.10.2022
(51) Int. Cl.: H01M 4/62, H01M 10/0525

(54) **POSITIVE ELECTRODE LITHIUM SUPPLEMENTATION ADDITIVE, AND PREPARATION METHOD THEREFOR AND USE THEREOF**

(30) Priority: 26.10.2021 CN 202111247964
(71) Applicant: Shenzhen Innovazone Technology Co., Ltd., Shenzhen, Guangdong 518000 (CN)
(72) Inventor: ZHONG, Zeqin, Shenzhen, Guangdong 518000 (CN); WAN, Yuanxin, Shenzhen, Guangdong 518000 (CN); KONG, Lingyong, Shenzhen, Guangdong 518000 (CN); ZHAO, Zhongke, Shenzhen, Guangdong 518000 (CN); ZHU, Chengben, Shenzhen, Guangdong 518000 (CN); ZHONG, Wen, Shenzhen, Guangdong 518000 (CN)
(74) Representative: Viering, Jentschura & Partner mbB Patent- und Rechtsanwälte
(86) International application number: PCT/CN2022/126221
(87) International publication number: WO 2023/071892

(57) **Abstract**

A cathode lithium-supplementing additive, a preparation method for the cathode lithium-supplementing additive and an application of the cathode lithium-supplementing additive. The cathode lithium-supplementing additive includes a lithium-containing core and an encapsulation layer covering a surface of the lithium-containing core. The encapsulation layer has pores and/or cracks and a sealing agent distributed at least at the pores and/or cracks for blocking the pores and/or cracks, where a material of the sealing agent includes an organic hydrophobic material. The sealing agent provided includes the organic hydrophobic material that can be embedded in the pores of the encapsulation material to further fill gaps in the sealing material, thus, a dense film layer is formed. The dense film layer can effectively isolate water vapor and carbon dioxide in the air, and can also prevent a reduction of metal elements in the lithium-containing core during a reaction process, which ensures a stability of the lithium-containing core, improves the lithium supplementation effect, and enables the resulting battery material to have the characteristics of high capacity and long cycle.

## Description

This application claims priority to the Chinese Patent Application No. 202111247964.2, entitled "Cathode Lithium-Supplementing Additive, Preparation Method Therefor and Application Thereof" filed in the China Patent Office, on Oct. 26, 2021, the entire content of which is incorporated herein by reference.

### TECHNICAL FIELD

The present application relates to the field of lithium-ion battery technology, and in particular to a cathode lithium-supplementing additive, a preparation method therefor and an application thereof.

### BACKGROUND

The oil energy crisis in the 1960s and 1970s forced people to look for new alternative energy sources. Lithium-ion batteries are considered to be one of the most promising energy sources due to their high operating voltage and energy density, relatively small self-discharge level, no memory effect, no pollution from heavy metal elements such as lead and cadmium, and ultra-long cycle life.

During an initial charging of a lithium-ion battery, the surface of the anode is usually accompanied by a formation of the solid electrolyte membrane SEI film. This process consumes a large amount of Li⁺, which means that part of the Li⁺ released from the cathode material is irreversibly consumed, the corresponding reversible specific capacity of the battery cell is reduced. The anode material, especially the silicon-based anode material, will further consume Li⁺, resulting in too low Coulombic efficiency for the first time.

To improve the problem of low Coulombic efficiency caused by the irreversible loss from the anode, in addition to pre-lithiation of the anode material and pole pieces, a lithium supplementation of the cathode can also achieve the requirements of high energy density. Lithium-rich iron-based material has a theoretical capacity of up to 867mAh/g, an operating voltage window being consistent with that of conventional lithium-ion batteries, and basically does not participate in the electrochemical process in the later stage, which is a lithium-supplementing additive having broad prospects. CN109301242A discloses a method for preparing a cathode lithium-supplementing material Li₅FeO₄ of a lithium-ion battery by means of sol-gel method. The material as the cathode lithium-supplementing material of the lithium-ion battery has the characteristics of large charging capacity and small discharge capacity. However, the material is harsh to environmental adaptability, has a large surface residual alkali and is difficult to process. CN 110459748 discloses a carbon-coated lithium ferrite material and a preparation method for the carbon-coated lithium ferrite material. By using a carbon source for gas-phase coating to isolate the external environment, the contact between lithium ferrite and water in the air is alleviated and the material stability is improved. Nonetheless, the coating layer is always difficult to completely isolate the contact with water in the air, resulting in material deterioration and failure.

Relevant studies have shown that the primary difficulty in lithium supplementation materials lies in the acquisition of high-purity active materials and the control of large amounts of residual alkali on the surface. In an atmosphere with a certain humidity, residual alkali is easily converted into products such as lithium hydroxide, which then causes a lot of troubles in subsequent slurry processing and affects the lithium supplementation effect in the battery.

### SUMMARY

### TECHNICAL PROBLEM

One objective of embodiments of the present application is to provide a cathode lithium-supplementing additive, a preparation method for the cathode lithium-supplementing additive and an application of the cathode lithium-supplementing additive, aiming to solve the problem in existing technologies that the lithium supplementation effect is poor during use, even if the lithium-rich material is wrapped with an encapsulation layer, the encapsulation layer still has a large number of pores, which causes the material to be susceptible to the influence of water vapor, resulting in a large amount of residual alkali on the surface of the material that are difficult to process.

### SOLUTIONS FOR PROBELM

### TECHNICAL SOLUTIONS

In order to solve the above technical problem, solutions adopted in the embodiments of the present application are as follows:

In accordance with a first aspect, a cathode lithium-supplementing additive is provided. The cathode lithium-supplementing additive includes a lithium-containing core and an encapsulation layer covering a surface of the lithium-containing core. The encapsulation layer has pores and/or cracks and a sealing agent distributed at least at the pores and/or cracks for blocking the pores and/or cracks, where a material of the sealing agent includes an organic hydrophobic material.

In accordance with a second aspect, a preparation method for a cathode lithium-supplementing additive is provided, which includes the following steps:

Providing, according to the cathode lithium-supplementing additive, lithium-containing core material particles, an encapsulation layer material precursor and a sealing agent material precursor, respectively.

Preparing a precursor, in an inert atmosphere, by using the encapsulation layer raw material precursor and the sealing agent material precursor to form a coating layer that is coated on the lithium-containing core material particles.

Performing, in an inert atmosphere, a post-processing on the precursor, to enable the coating layer to form the encapsulation layer, and the sealing agent to be distributed at least at the pores and/or cracks of the encapsulation layer for blocking the pores and/or cracks, to obtain the cathode lithium-supplementing additive.

In accordance with a third aspect, a cathode sheet is provided. The lithium-containing core cathode sheet includes a cathode current collector and a cathode active material layer located on the lithium-containing core cathode current collector. The lithium-containing core cathode active material layer contains a cathode active material, a binder, a conductive agent and a cathode lithium-supplementing additive, where the lithium-containing core cathode lithium-supplementing additive is selected from the cathode lithium-supplementing additive or prepared by the preparation method for the cathode lithium-supplementing additive.

In a fourth aspect, a secondary battery is provided. The lithium-containing core secondary battery includes the lithium-containing core cathode sheet.

### BENEFICIAL EFFECTS OF INVENTION

### BENEFICIAL EFFECTS

The beneficial effect of the cathode lithium-supplementing additive provided by the embodiment of the present application includes that: the cathode lithium-supplementing additive is provided with an encapsulation layer covering a surface of the lithium-containing core, and the encapsulation layer has pores and/or cracks and a sealing agent distributed at least at the pores and/or cracks for blocking the pores and/or cracks; where a material of the sealing agent includes an organic hydrophobic material. The provided sealing agent includes the organic hydrophobic material that can be embedded in the pores of the encapsulation material to further fill gaps in the sealing material, thus, a dense film layer is formed. The dense film layer can effectively isolate water vapor and carbon dioxide in the air, and can also prevent a reduction of metal elements in the lithium-containing core during a reaction process, thus, a stability of the lithium-containing core is ensured. Moreover, the dense film layer, when added to a secondary battery for use, can stimulate a release of lithium ions from the lithium-containing core material, which achieves a true sense of efficient lithium supplementation, and improves an overall electrical conductivity of the material. Thus, the encapsulation layer effectively ensures a storage stability and a processing stability of lithium-containing materials, and the encapsulation layer has a high density, which solves the problem of difficulty in processing and performance degradation caused by insufficient density of the traditional encapsulation layer, and ensures easy processing. Also, the resulting battery material has the characteristics of high capacity and long cycle.

The beneficial effect of the preparation method for the cathode lithium-supplementing additive provided by the embodiment of the present application includes that: the preparation method is simple to operate, and only needs to perform operations of: providing lithium-containing core material particles, a encapsulation layer material precursor and a sealing agent material precursor; forming a coating layer by using the encapsulation layer raw material precursor and the sealing agent material precursor to prepare a precursor; and then performing a post-processing on the precursor to obtain the cathode lithium-supplementing additive. In the cathode lithium-supplementing additive obtained by the above preparation method, the sealing agent is distributed at least at the pores and/or cracks of the encapsulation layer for blocking the pores and/or cracks, to form a dense film layer. The dense film layer, on the one hand, isolates the lithium-containing core from water vapor or carbon dioxide in the air, thus, the stability of the lithium-containing core can be ensured. On the other hand, the dense film layer has good electrical conductivity, which can improve the application of materials in secondary batteries and ensure that the obtained battery material have the characteristics of high capacity and long cycle.

The beneficial effect of the cathode sheet provided by the embodiment of the present application includes that: the cathode sheet includes a cathode current collector and a cathode active material layer located on the cathode current collector. The cathode active material layer includes the provided cathode lithium-supplementing additive. The provided cathode lithium-supplementing additive can be conducive to lithium supplementation, so that the resulting cathode material has good cycle stability, which further improves the performance of lithium-ion battery.

The beneficial effect of the secondary battery provided by the embodiment of the present application includes that: the provided secondary battery includes the cathode sheet, and the cathode sheet contains the cathode lithium-supplementing additive, so that the resulting secondary battery has the characteristics of high capacity and long cycle, which improves an overall electrochemical performance of the battery and is conducive to widespread use.

### BRIEF DESCRIPTION OF THE DRAWINGS

### DESCRIPTION OF DRAWINGS

In order to illustrate the solutions in the embodiments of the present application more clearly, a brief description of the drawings required for use in the description of the embodiments will be given below. It will be apparent that the drawings in the following description are only some embodiments of the present application, and for a person of ordinary skill in the art, other drawings may also be obtained on the basis of these drawings without exerting any creative labor.
FIG. 1 is a schematic diagram of a cathode lithium-supplementing additive provided by an embodiment of the present application.
FIG. 2 is a scanning electron microscope image of the cathode lithium-supplementing additive provided in Example A1 of the present application.
FIG. 3 is a scanning electron microscope image of the cathode lithium-supplementing additive provided in Example A2 of the present application.
FIG. 4 is a scanning electron microscope image of the cathode lithium-supplementing additive provided in Comparative Example A1 of the present application.
FIG. 5 is an X-ray diffraction pattern of the cathode lithium-supplementing additive provided in Example A1 of the present application.
FIG. 6 is an X-ray diffraction pattern of the cathode lithium-supplementing additive provided in Example A5 of the present application.

### INVENTION EMBODIMENTS

### DETAILED DESCRIPTION OF THE EMBODIMENTS

In order to illustrate the objectives, technical solutions and advantages of the present application more clearly and comprehensibly, the present application will be further described in detail below with reference to the drawings and embodiments. It should be understood that the embodiments particularly described here are used only to explain the present invention and are not intended to limit the present application.

It should be noted that when a component is referred to as being "fixed to" or "disposed on" another component, it may be directly on the other component or indirectly on the other component. When a component is referred to as being "connected to" another component, it may be directly or indirectly connected to the other component. The orientation or positional relationship indicated by the terms "upper", "lower", "left", "right", etc. are based on the orientation or positional relationship shown in the drawings, which are intended only for convenience of description and do not indicate or imply the device or element referred thereto must have specific orientations, be constructed and operated in specific orientations, and therefore cannot be construed as limitations to the present application. For persons of ordinary skill in the art, the specific meanings of the above terms can be understood according to specific circumstances. The terms "first" and "second" are used only for convenience of description and cannot be understood as indicating or implying relative importance or implicitly indicating the quantity of technical features. The phrase "a/the plurality of" means two or more, unless otherwise expressly and specifically limited.

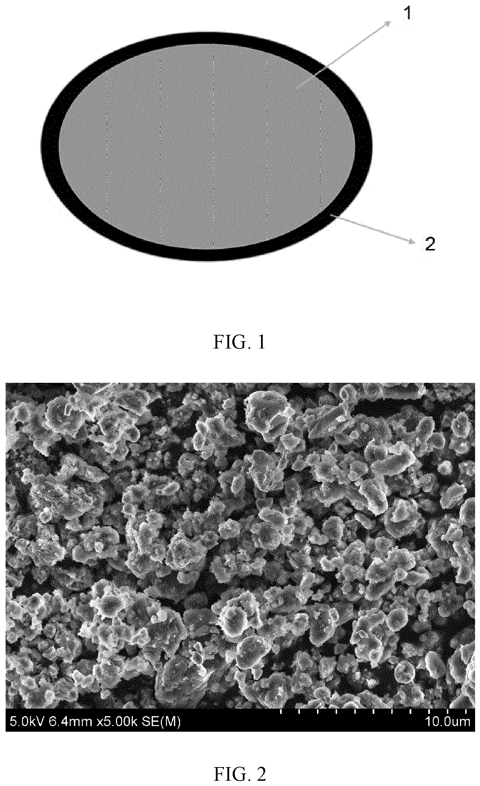

A first aspect of the embodiments of the present application provides a cathode lithium-supplementing additive. As shown in FIG. 1, the cathode lithium-supplementing additive includes a lithium-containing core 1 and an encapsulation layer 2 covering a surface of the lithium-containing core 1. The encapsulation layer 2 has pores and/or cracks and a sealing agent distributed at least at the pores and/or cracks for blocking the pores and/or cracks, where a material of the sealing agent includes an organic hydrophobic material.

The cathode lithium-supplementing additive provided in the first aspect of the embodiments of the present application includes an encapsulation layer disposed covering the surface of the lithium-containing core. The encapsulation layer has pores and/or cracks and the sealing agent distributed at least at the pores and/or cracks for blocking the pores and/or cracks, where the material of the sealing agent includes the organic hydrophobic material. The provided sealing agent includes the organic hydrophobic material that can be embedded in the pores of encapsulation material to further fill gaps in sealing material, so that a dense film layer is formed. The dense film layer can effectively isolate water vapor and carbon dioxide in the air, and can also prevent metal elements in the lithium-containing core from being reduced during a reaction process, thus, the stability of the lithium-containing core is ensured. Moreover, the dense film layer, when being added to a secondary battery for use, can stimulate a release of lithium ions from the lithium-containing core material, which achieves an efficient lithium supplementation in a true sense, and improves an overall electrical conductivity of the material. Thereby, the encapsulation layer effectively ensures the storage stability and processing stability of the lithium-containing material, and the encapsulation layer has a high density, which solves the problem of difficulty in processing and performance degradation caused by insufficient density of the traditional encapsulation layer, and ensures easy processing. Also, the resulting battery material has the characteristics of high capacity and long cycle.

In some embodiments, the cathode lithium-supplementing additive includes a lithium-containing core, where the material of the lithium-containing core includes LiₓM_{y}O_{z}, where 0 < x ≤ 6, 0 < y ≤ 3, 0 < z ≤ 4, and M includes at least one of Fe, Co, Ni, Mn, V, Cu, Mo, Al, Ti, Mg, and Zr.

In some embodiments, the cathode lithium-supplementing additive includes a lithium-containing core, where the material of the lithium-containing core is selected from a lithium-rich iron-based composite material, and the lithium-rich iron-based composite material includes aLiFeO₂·bLi₂O·cNₓO_{y}, where a+b ≥ 0.98, c ≤ 0.02, 1.8 ≤ b/a ≤ 2.1, a, b, c are molar quantities; 1≤ y/x ≤2.5; and N includes at least one of Ni, Co, Mn, T, Al, Cu, V, Zr. Based on the fact that the lithium-rich iron-based material has a theoretical capacity as high as 867 mAh/g, has an operating voltage window same as the conventional lithium-ion battery, and basically does not participate in the electrochemical process in the later period, thus, the lithium-rich iron-based composite material is provided as the lithium-containing core material of the cathode lithium-supplementing additive.

In some embodiments, the lithium-containing core satisfies that: 1 µm ≤ D₅₀ ≤ 10 µm, D₁₀/D₅₀ ≥ 0.3, D₉₀/D₅₀ ≤ 2. The obtained material can be ensured to have high stability and equalized size by controlling particle size conditions of the lithium-containing core. If the median particle size of the lithium-containing core is too large, then the resistance of lithium ions will be greater during a release of lithium ions, which is not conducive to a complete release and is not conducive to lithium supplementation. If the median particle size of the lithium-containing core is too small, then a specific surface area of the particles obtained will be too large and agglomeration will easily occur, resulting in material instability and easy failure of the material, which thus cannot achieve a good lithium supplementation effect.

In some embodiments, the specific surface area of the lithium-containing core is in a range of 0.5~20 m²/g. The specific surface area of the lithium-containing core is controlled to be moderate to ensure that the obtained particle size of the lithium-containing core is moderate, which is conducive to better dispersion, and can achieve the efficient lithium supplementation during use.

Further, the cathode lithium-supplementing additive includes: an encapsulation layer disposed covering the surface of the lithium-containing core, the encapsulation layer has pores and/or cracks and a sealing agent distributed at least at the pores and/or cracks for blocking the pores and/or cracks; where the material of the sealing agent includes an organic hydrophobic material. The provided sealing agent includes the organic hydrophobic material that can be embedded in the pores of the encapsulation material to further fill gaps in the sealing material, thus, a dense film layer is formed. The dense film layer can effectively isolate water vapor and carbon dioxide in the air, and can also prevent the reduction of metal elements in the lithium-containing core during the reaction process to ensure the stability of the lithium-containing core. Also, the dense film layer, when added to the secondary battery for use, can stimulate the release of lithium ions from the lithium-containing core material, which achieves a real sense of efficient lithium supplementation and improves the overall electrical conductivity of the material. Thus, the encapsulation layer effectively ensures the storage stability and processing stability of lithium-containing materials, and the encapsulation layer is highly dense, which solves the problem of difficulty in processing and performance degradation caused by insufficient density of the traditional encapsulation layer, and ensures easy processing. Also, the resulting battery material has the characteristics of high capacity and long cycle.

In some embodiments, during use of the cathode lithium-supplementing additive, the sealing agent is at least partially prolapsed from the pores and/or cracks of the encapsulation layer. During use of the cathode lithium-supplementing additive in a battery, a charging and discharge of the battery will generate gas, and the gas enables at least part of the sealing agent to be prolapsed from the pores and/or cracks of the encapsulation layer, so that the pores and/or cracks of the encapsulation layer is reopened, which is conducive to the release of lithium ions from the cathode lithium-supplementing additive, achieving the efficient lithium supplementation in the true sense, and improving the overall electrical conductivity of the material.

In some embodiments, the organic hydrophobic material includes at least one of tar, polyethylene, and polypropylene.

In some embodiments, tar is used as a sealing agent, which can be in the pores of the encapsulation material to further fill the gaps in the sealing material to form a dense film layer. The tar is mainly a high molecular weight component such as an aromatic hydrocarbon produced when the organic carbon source is thermally decomposed, and the tar is a hydrophobic material, which can effectively isolate water vapor and carbon dioxide in the air, and can also prevent the reduction of metal elements in the lithium-containing core during the reaction process, thus, the stability of the lithium-containing core can be ensured.

In some embodiments, the tar includes at least one of xylene, phenanthrene, anthracene, pyrene, benzopyrene, and benzopyrene-free.

In other embodiments, polyethylene is used as the sealing agent. Polyethylene is obtained through the polymerization reaction of multiple C₂H₄ monomers. Polyethylene can be better embedded in the pores of the encapsulation material and fill the gaps in the sealing material to form a dense protective film with the sealing material. Polyethylene has excellent acid and alkali resistance, good chemical stability, and is not prone to absorb water. The polyethylene, as a sealing material, can effectively protect the lithium-containing core and effectively isolate water vapor and carbon dioxide in the air.

In other embodiments, polypropylene is used as the sealing agent. Polypropylene is obtained through the polymerization reaction of multiple C₃H₆ monomers. Polypropylene has a low a density, thus after forming a dense film layer with the encapsulation material, can ensure the mass of the product to be low, which is beneficial to use. Polypropylene is resistant to corrosion by acids, alkalis, salt solutions and various organic solvents, which is conducive to better protecting the lithium-containing core from water vapor and carbon dioxide in the air, and improving the stability of the lithium-containing core.

In some embodiments, the material of the encapsulation layer includes a conductive hydrophobic material. On the one hand, the conductive hydrophobic material provided can be mixed evenly with the organic hydrophobic material to form a dense film layer to ensure a tight integration with the organic hydrophobic material. On the other hand, the provided conductive hydrophobic material is ensured to have a certain electrical conductivity, thus the resulting cathode lithium-supplementing additive is enabled to have a good electrical conductivity and can stimulate the release of lithium ions from the lithium-containing core material, thereby achieving the efficient lithium supplementation in a true sense.

In some embodiments, the conductive hydrophobic material includes a conductive carbon material. The conductive carbon material is provided, which on the one hand, can effectively isolate water vapor and carbon dioxide in the air, and on the other hand, has a certain electric conductivity, which enables the cathode lithium-supplementing additive to have a good electrical conductivity and can stimulate the release of lithium ions from the lithium-containing core material, thereby the efficient lithium supplementation is achieved in a true sense.

In some embodiments, a mass ratio of the lithium-containing core and the encapsulation layer is 95~99:1~5. If the mass of the encapsulation layer is too small, then the lithium-containing core cannot be completely and uniformly coated, resulting in a poor coating effect, and then the lithium-containing core will be susceptible to the influence of water vapor and carbon dioxide in the air during use, which is not conducive to processing and has low performance. If the mass of the encapsulation layer is too large, then the thickness of the resulting encapsulation layer is too thick, which affects the migration of lithium ions and is not conducive to achieving the efficient lithium supplementation.

In some embodiments, a mass content of the sealing agent in the encapsulation layer ranges from 100 to 6000 ppm. The sealing agent can be mixed well with the encapsulation material when the mass content of the sealing agent is controlled to be moderate. The stability of the material will be affected if the content of the sealing agent is too high. The stability of the transition metal containing the lithium-containing core cannot be guaranteed under high temperature conditions if the content of the sealing agent is too low, which will cause the transition metal containing the lithium-containing core to be easily reduced, affects the reduces the release of lithium ions and thus is not conducive to achieving the efficient lithium supplementation.

In some embodiments, the encapsulation layer has a thickness of 5-100 nm. If the thickness of the encapsulation layer is too thin, then the lithium-containing core cannot be coated uniformly and completely. If the thickness of the encapsulation layer is too thick, then the migration of lithium ions will be affected and the mass of the additive will also be increased, which affects the normal use.

In some particular embodiments, the thickness of the encapsulation layer is in a range of 10~50 nm, which ensures that the resulting encapsulation layer can evenly and completely encapsulate the lithium-containing core, and is suitable for the migration of lithium ions to achieve a better lithium supplementation effect.

In some embodiments, a powder resistivity of the cathode lithium-supplementing additive is in a range of 1.0~500 Ω/cm. The cathode lithium-supplementing additive can be ensured a better electrical conductivity by controlling its powder resistivity, which is beneficial to improving battery performance.

A second aspect of the embodiments of the present application provides a preparation method for a cathode lithium-supplementing additive, which includes the following steps:

S01. Providing respectively lithium-containing core material particles, an encapsulation layer material precursor and a sealing agent material precursor according to the cathode lithium-supplementing additive;

S02. Preparing a precursor, in an inert atmosphere, by using the encapsulation layer raw material precursor and the sealing agent material precursor to form a coating layer that is coated on the lithium-containing core material particles; and

S03. Performing, in an inert atmosphere, a post-processing on the precursor to enable the coating layer to form an encapsulation layer and the sealing agent to be distributed at least at the pores and/or cracks of the encapsulation layer for blocking the pores and/or cracks, to obtain the cathode lithium-supplementing additive.

The preparation method for the cathode lithium-supplementing additive provided in the second aspect of the embodiments of the present application is simple to operate, and only needs to perform operations of: providing the lithium-containing core material particles, the encapsulation layer material precursor and the sealing agent material precursor, using the encapsulation layer raw material precursor and the sealing agent material precursor to form the coating layer to prepare the precursor, and then performing the post-processing on the precursor, to obtain the cathode lithium-supplementing additive. In the cathode lithium-supplementing additive obtained by this preparation method, the sealing agent is at least distributed at the pores and/or cracks of the encapsulation layer for blocking the pores and/or cracks to form a dense film layer. The dense film layer, on the one hand, isolates the lithium-containing core from water vapor or carbon dioxide in the air, ensuring the stability of the lithium-containing core. On the other hand, the dense film layer has good conductivity, which can improve the application of materials in secondary batteries and ensure that the obtained battery material has the characteristics of high capacity and long cycle.

In step S01, the lithium-containing core material particles, the encapsulation layer material precursor and the sealing agent material precursor are respectively provided according to the cathode lithium-supplementing additive.

In some embodiments, a material of the lithium-containing core includes LiₓM_{y}O_{z}, where 0 < x ≤ 6, 0 < y ≤ 3, 0 < z ≤ 4, and M includes at least one of Fe, Co, Ni, Mn, V, Cu,Mo, Al, Ti, Mg, and Zr.

In some particular embodiments, since the material of the lithium-containing core is selected from the lithium-rich iron-based composite material, the lithium-rich iron-based composite material of the lithium-containing core includes aLiFeO₂·bLi₂O·cNₓO_{y}, where a+b ≥ 0.98, c ≤ 0.02, 1.8≤ b/a ≤ 2.1, a, b, c are mole numbers, 1 ≤ y/x ≤ 2.5, and N includes at least one of Ni, Co, Mn, T, Al, Cu, V, and Zr.

In some embodiments, a method for preparing the lithium-containing core material particles includes steps of: providing a lithium source and an M metal source, uniformly mixing the lithium source and M metal source at a molar ratio according to the lithium-containing core material particles, and then drying and crushing the above uniformly mixed material to obtain the lithium-containing core material particles.

In some embodiments, the Li source of the lithium-containing core includes at least one of lithium hydroxide, lithium carbonate, lithium nitrate, lithium acetate, and lithium oxide.

In some embodiments, the M metal source of the lithium-containing core includes at least one of Fe, Co, Ni, Mn, V, Cu, Mo, Al, Ti, Mg, and Zr.

In some particular embodiments, the lithium-containing core material particles are selected from the lithium-rich iron-based composite material, and the method for preparing the lithium-containing core material particles includes steps of: providing an iron source, a lithium source, and an M metal source, uniformly mixing the iron source, the lithium source and the N metal source at a molar ratio according to the lithium-containing core material particles, and then drying and crushing the above uniformly mixed material to obtain the lithium-containing core material particles.

In some embodiments, the iron source includes at least one of iron oxide, iron nitrate, iron chloride, iron hydroxide, iron acetate, and iron hydroxide.

In some embodiments, the Li source of the lithium-containing core includes at least one of lithium hydroxide, lithium carbonate, lithium nitrate, lithium acetate, and lithium oxide.

In some embodiments, the N metal source of the lithium-containing core includes at least one of Cu, Co, Al, Ti, Fe, V, and Zr.

In some embodiments, the sealing agent material precursor includes at least one of C1 to C4 alcohols, ethers, ketones, and hydrocarbon compounds.

In some embodiments, the encapsulation layer material precursor includes at least one of C1 to C4 alcohols, ethers, ketones, and hydrocarbon compounds.

In some particular embodiments, the sealing agent material precursor and encapsulation layer material precursor provided are in consistence when the encapsulation layer material is selected from a conductive carbon material.

In step S02, in an inert atmosphere, the encapsulation layer raw material precursor and the sealing agent material precursor are used to form a coating layer that is coated on the lithium-containing core material particles, to prepare the precursor.

In some embodiments, the inert atmosphere includes at least one of Ar atmosphere, N₂ atmosphere, and He atmosphere.

In some embodiments, the step of preparing the precursor includes that the lithium-containing core material particles, the encapsulation layer material precursor and the sealing agent material precursor are mixed in an inert atmosphere, and then composite-coated in situ, where the encapsulation layer raw material precursor and the sealing agent material precursor are used to form a coating layer that is coated on the lithium-containing core material particles.

In other embodiments, the step of preparing the precursor includes that the encapsulation layer material precursor and the sealing agent material precursor are provided, the lithium-containing core material particles is placed in an inert atmosphere, the lithium-containing core material is coated by the encapsulation layer material precursor and the sealing agent material precursor through a chemical vapor deposition to form a coating layer that is coated on the lithium-containing core material particles.

In some embodiments, in the step of preparing the precursor, a preparation condition includes that: performing a heating at a heating rate of 10-500°C/hr to reach a temperature of 600-1000°C, and reacting for 4-48 hrs.

In some particular embodiments, the encapsulation layer material precursor and the sealing agent material precursor are both selected from the carbon material. The step of preparing the precursor includes that: the raw material of lithium-containing core is placed in an inert atmosphere and heated at a heating rate of 100-500°C/hr to raise a temperature up to 450°C to 900°C, and then hold at the temperature for 0.5-10 hrs with the carbon source being provided for coating, to form an encapsulation layer on the surface of the raw material of the lithium-containing core, to prepare the precursor.

In step S03, the precursor is post-processed in an inert atmosphere, to enable the coating layer to form an encapsulation layer and the sealing agent to be distributed at least at the pores and/or cracks of the encapsulation layer for blocking pores and/or cracks, to obtain the cathode lithium-supplementing additive.

In some embodiments, in the step of post-processing the precursor, the post-processing condition includes that: performing a heating at a heating rate of 0-500°C/hr to reach a temperature of 600-1000°C to perform a heat treatment for 0.5-20 hrs. By performing the heat treatment under this condition, the sealing agent can be obtained in the encapsulation layer.

In some embodiments, the sealing agent precursor is selected from a carbon source, and the precursor is post-processed to form tar in the encapsulation layer to obtain the cathode lithium-supplementing additive.

In some particular embodiments, the step of forming the tar in the encapsulation layer includes that: the precursor is heated at a heating rate of 200°C/hr to reach a temperature of 500°C and hold at the temperature for 1 hr, then, cooled down to room temperature, in this way, the tar is formed in the encapsulation layer of the precursor, and the sealing agent is enabled to be distributed at least at the pores and/or cracks of the encapsulation layer for blocking the pores and/or cracks, thereby the cathode lithium-supplementing additive is obtained.

In other particular embodiments, the step of forming the tar in the encapsulation layer includes that: the precursor is placed in an inert atmosphere and heated at a heating rate of 200°C/hr to reach a temperature of 700°C, and the temperature is hold for 0.5 hr after a carbon source of 1 L/min is provided, and then cooled down to the room temperature, thereby, the tar is formed in the encapsulation layer of the precursor, thereby the cathode lithium-supplementing additive is obtained.

In some embodiments, the preparation method for the cathode lithium-supplementing additive is prepared in a high-temperature calcination apparatus, where the high-temperature calcination apparatus includes at least one of a roller kiln, a push plate kiln, a rotary furnace, a rotary furnace, and a fluidized bed.

A third aspect of the embodiments of the present application provides a cathode sheet. The lithium-containing core cathode sheet includes a cathode current collector and a cathode active material layer located on the lithium-containing core cathode current collector. The lithium-containing core cathode active material layer includes a cathode active material, a binder, a conductive agent and a cathode lithium-supplementing additive, where the lithium-containing core cathode lithium-supplementing additive is selected from the cathode lithium-supplementing additive or prepared by the preparation method for the cathode lithium-supplementing additive.

The cathode sheet provided in the third aspect of the embodiments of the present application includes the cathode current collector and the cathode active material layer located on the cathode current collector. The cathode active material layer includes the above-provided cathode lithium-supplementing additive. The provided cathode lithium-supplementing additive is conducive to lithium supplementation, thus, the resulting cathode material is enabled a good cycle stability, which further improves the performance of lithium-ion batteries.

In some embodiments, a mass percentage of the lithium-containing core cathode lithium-supplementing additive in the lithium-containing core cathode active material layer is in a range of 60-99 wt%. Since the lithium-supplementing additive provides a large amount of Li, and most of the Li cannot be recycled, if the cathode lithium-supplementing additive is added in an excessive amount in the cathode active material layer, then the excessive amount of Li will cause lithium ions to precipitate on the surface of the anode during the charging process, resulting in Lithium dendrites. If the amount of cathode lithium-supplementing additive being added is too smaller, then the initial efficiency of the battery will be reduced, affecting the use of the battery.

In some embodiments, the mass percentage of the conductive agent in the lithium-containing core cathode active material layer is in a range of 0.2-20 wt%. The mass percentage of the binder in the lithium-containing core cathode active material layer is in a range of 0.5-20 wt%.

In some embodiments, a method for preparing the cathode sheet includes steps of: thoroughly mixing the cathode active material, the cathode lithium-supplementing additive, the conductive agent, the binder and the solvent, then coating the mixture on the cathode current collector, and drying the same to obtain the cathode sheet.

A fourth aspect of the embodiments of the present application provides a secondary battery, which is characterized in that the lithium-containing core secondary battery includes the cathode sheet.

A secondary battery is provided in the fourth aspect of the embodiments of the present application, the provided secondary battery includes a cathode sheet, and the cathode sheet includes the cathode lithium-supplementing additive, so that the resulting secondary battery has the characteristics of high capacity and long cycle, which improves the overall electrochemical performance of the battery and is conducive to widespread use.

In some embodiments, an initial charge capacity of the secondary battery is ≥ 380 mAh/g. Since the cathode sheet of the secondary battery obtained has included the cathode lithium-supplementing additive, the initial charge capacity of the secondary battery is increased and the performance of the secondary battery is improved.

In some embodiments, the secondary battery generates gas during a charging process, and the gas enables at least part of the sealing agent for lithium supplementation of the cathode to be prolapsed from the pores and/or cracks of the encapsulation layer, causing the lithium ions of the cathode lithium-supplementing additive to migrate. Thus, when the cathode lithium-supplementing additive is added into the secondary battery for use, the release of lithium ions from the lithium-containing core material can stimulated which achieves the efficient lithium supplementation in a true sense and improves the overall electrical conductivity of the material, so that the resulting battery material has the characteristics of high capacity and long cycle.

The following is illustrated with reference to particular embodiments.

### Example A1

A cathode lithium-supplementing additive and a preparation method therefor.

The cathode lithium-supplementing additive includes a lithium-containing core and an encapsulation layer covering a surface of the lithium-containing core. The lithium-containing core is LiFe0₂·1.99Li₂O. The material of the encapsulation layer includes an encapsulation material and a sealing agent embedded in pores of the encapsulation material, where the encapsulation material includes a conductive carbon material, and the sealing agent material includes tar. The D₅₀ of the lithium-containing core is 5 µm, and the thickness of the encapsulation layer is 10 nm.

The preparation method for the cathode lithium-supplementing additive includes the following steps:
Fe(NO₃)₃·9H₂O and LiNO₃ were added into the 15 wt% PVP aqueous solution at a molar ratio of 1:4.98, mixed thoroughly, and then crushed after a spray dry at 280°C. In a nitrogen atmosphere, the temperature was raised to 850°C at a rate of 300°C/hr and maintained for 15 hrs. After cooling, the product was mechanically crushed and classified to obtain in-situ carbon-coated LiFeO₂·1.99Li₂O powder. Further, the in-situ carbon-coated LiFeO₂·1.99Li₂O powder was placed in a rotary furnace with N₂ being provided for protection, and the temperature was raised to 500°C at a heating rate of 200°C/h and maintained for 1 hr, and then cooled down to obtain tar & carbon-coated LiFeO₂·1.99Li₂O powder as the cathode lithium-supplementing additive.

### Example A2

A cathode lithium-supplementing additive and a preparation method therefor.

The cathode lithium-supplementing additive includes a lithium-containing core and an encapsulation layer covering a surface of the lithium-containing core. The lithium-containing core is LiFeO₂·1.99Li₂O·0.005Al₂O₃. The encapsulation layer includes an encapsulation material and a sealing agent embedded in pores of the encapsulation material, where the encapsulation material includes a conductive carbon material, and the material of the sealing agent includes tar. The D₅₀ of the lithium-containing core is 3 µm, and the thickness of the encapsulation layer is 14 nm.

The preparation method for the cathode lithium-supplementing additive includes the following steps:
Fe(NO₃)₃·9H₂O, LiNO₃ and Al(NO₃)₃ were added into the 15 wt% citric acid aqueous solution at a molar ratio of 1:4.98:0.01, mixed thoroughly, and then crushed after a spray-dry at 280°C. In a nitrogen atmosphere, the temperature is raised to 850°C at a rate of 300°C/hr and maintained for 15 hrs. After cooling, the product is mechanically crushed and classified to obtain tar & carbon composite coated LiFeO₂·1.99Li₂O·0.005Al₂O₃ powder as the cathode lithium-supplementing additive.

### Example A3

A cathode lithium-supplementing additive and a preparation method therefor.

The cathode lithium-supplementing additive includes a lithium-containing core and an encapsulation layer covering a surface of the lithium-containing core. The lithium-containing core is LiFeO₂·1.99Li₂O·0.01CuO. The encapsulation layer includes encapsulation material and a sealing agent embedded in pores of the encapsulation material, where the encapsulation material includes a conductive carbon material, the material of the sealing agent includes tar. The D₅₀ of the lithium-containing core is 6 µm, and the thickness of the encapsulation layer is 20 nm.

The preparation method for the cathode lithium-supplementing additive includes the following steps:
Fe₂O₃, LiOH and CuO were mixed thoroughly at a molar ratio of 1:10.1:0.01. In a nitrogen atmosphere, the temperature was raised to 900°C at a rate of 300°C/hr and maintained for 20 hrs. After cooling, the product was mechanically crushed and classified to obtain LiFeO₂·2.025Li₂O·0.01CuO powder. The powder obtained by crushing was placed in a rotary furnace with N₂ being provided for protection, the temperature was raised to 700°C at a heating rate of 200°C/hr, and maintained for 0.5h with acetylene of 1 L/min being provided for protection, and then cooled down to obtain tar & carbon-coated LiFeO₂·1.99Li₂O·0.01CuO powder as the cathode lithium-supplementing additive.

### Example A4

A cathode lithium-supplementing additive and a preparation method therefor.

The cathode lithium-supplementing additive includes a lithium-containing core and an encapsulation layer covering a surface of the lithium-containing core. The lithium-containing core is LiFeO₂·1.99Li₂O·0.005Al₁₂O₃. The encapsulation layer includes an encapsulation material and a sealing agent embedded in pores of the encapsulation material, where the encapsulation material includes a conductive carbon material, and the material of the sealing agent includes tar. The D₅₀ of the lithium-containing core is 8 µm, and the thickness of the encapsulation layer is 30 nm.

The preparation method for the cathode lithium-supplementing additive includes the following steps:
Fe(NO₃)₃·9H₂O, LiNO₃ and Al(NO₃)₃ were added into the 15 wt% citric acid solution at a molar ratio of 1:4.98:0.01, mix thoroughly, and then crushed after a spray-dry at 280°C. In an air atmosphere, the temperature was raised to 850°C at a rate of 300°C/hr and maintained for 15 hrs. After cooling, the product was mechanically crushed and classified to obtain in-situ carbon-coated LiFeO₂·1.99Li₂O·0.005Al₂O₃ powder. The powder obtained by crushing was placed in a rotary furnace with nitrogen protection, and the temperature was raised to 700°C at a heating rate of 200°C/hr, and maintained for 1 hr with acetylene of 1 L/min and N₂ of 10 L/min being provided for protection, and then cooled down to obtain tar & carbon-coated LiFeO₂·1.99Li₂O·0.005Al₂O₃ powder as the cathode lithium-supplementing additive.

Example A5

### A cathode lithium-supplementing additive and a preparation method therefor.

The cathode lithium-supplementing additive includes a lithium-containing core and an encapsulation layer covering a surface of the lithium-containing core. The lithium-containing core is LiFeO₂·1.99Li₂O·0.01CuO. The encapsulation layer includes an encapsulation material and a sealing agent embedded in pores of the encapsulation material, where the encapsulation material includes a conductive carbon material, and the material of the sealing agent includes tar. The D₅₀ of the lithium-containing core is 9 µm, and the thickness of the encapsulation layer is 40 nm.

The preparation method for the cathode lithium-supplementing additive includes the following steps:
Fe₂O₃, LiOH and CuO were mixed thoroughly at a molar ratio of 1:10.1:0.01. In a nitrogen atmosphere, the temperature was raised to 900°C at a rate of 300°C/hr and maintained for 20 hrs. After cooling, the product was mechanically crushed and classified to obtain LiFeO₂·2.025Li₂O·0.01CuO powder. The powder obtained by crushing was placed into a rotary furnace with nitrogen being added for protection, the temperature was raised to 900°C at a heating rate of 200°C/hr, and maintained for 2 hrs with acetone of 1 L/min and N₂ of 20 L/min being provided for protection, and then cooled down to obtain tar & carbon-coated LiFeO₂·1.99Li₂O·0.01CuO powder as the cathode lithium-supplementing additive.

### Example A6

A cathode lithium-supplementing additive and a preparation method therefor.

The cathode lithium-supplementing additive includes a lithium-containing core and an encapsulation layer covering a surface of the lithium-containing core. The lithium-containing core is LiFeO₂·1.99Li₂O·0.01MnO₂. The encapsulation layer includes an encapsulation material and a sealing agent embedded in the pores of the encapsulation material, where the encapsulation material includes a conductive carbon material, and the material of the sealing agent includes tar. The D₅₀ of the lithium-containing core is 10 µm, and the thickness of the encapsulation layer is 50 nm.

The preparation method for the cathode lithium-supplementing additive includes the following steps:
Fe₂O₃, LiOH and MnO₂ were mixed thoroughly at a molar ratio of 1:10.1:0.01. In a nitrogen atmosphere, the temperature was raised to 900°C at a rate of 300°C/hr and maintained for 20 hrs. After cooling, the product was mechanically crushed and classified to obtain LiFeO₂·2.025Li₂O·0.01MnO powder. The powder obtained by crushing was placed in a rotary furnace with nitrogen being provided for protection, the temperature was raised to 700°C at a heating rate of 200°C/hr, and maintained for 5 hrs with ethanol of 1 L/min and N₂ of 20 L/min being provided for protection, and then cooled down to obtain tar & carbon-coated LiFeO₂·1.99Li₂O·0.01MnO₂ powder as the cathode lithium-supplementing additive.

### Example A7

A cathode lithium-supplementing additive and a preparation method therefor.

The cathode lithium-supplementing additive includes a lithium-containing core and an encapsulation layer covering a surface of the lithium-containing core. The lithium-containing core is LiFe0₂·1.99Li₂O. The material of the encapsulation layer includes an encapsulation material and a sealing agent embedded in pores of the encapsulation material, where the encapsulating material includes a conductive carbon material, and the sealing agent material includes polyethylene. The D50 of the lithium-containing core is 5 µm, and the thickness of the encapsulation layer is 10 nm.

The preparation method for the cathode lithium-supplementing additive includes the following steps:
Fe(NO₃)₃·9H₂O and LiNO₃ were added into the 15 wt% PVP aqueous solution at a molar ratio of 1:4.98, mixed thoroughly, and then crushed after a spray dry at 280°C. In a nitrogen atmosphere, the temperature was raised to 850°C at a rate of 300°C/hr and maintained for 15 hrs. After cooling, the product was mechanically crushed and classified to obtain in-situ carbon-coated LiFeO₂·1.99Li₂O powder. Further, the in-situ carbon-coated LiFe0₂·1.99Li₂O powder, after being mixed with 5 wt% low-density PE, was placed in a rotary furnace with N₂ being providing for protection, the temperature was raised to 500°C at a heating rate of 200°C/hr and maintained for 1 hr, then cooled down to obtain Polyethylene & carbon-coated LiFeO₂·1.99Li₂O powder as the cathode lithium-supplementing additive.

### Example A8

A cathode lithium-supplementing additive and a preparation method therefor.

The cathode lithium-supplementing additive includes a lithium-containing core and an encapsulation layer covering a surface of the lithium-containing core. The lithium-containing core is LiFeO₂·1.99Li₂O·0.005Al₂O₃. The encapsulation layer includes an encapsulation material and a sealing agent embedded in pores of the encapsulation material, where the encapsulation material includes a conductive carbon material, and the material of the sealing agent includes polypropylene. The D₅₀ of the lithium-containing core is 3 µm, and the thickness of the encapsulation layer is 14 nm.

The preparation method for the cathode lithium-supplementing additive includes the following steps:
Fe(NO₃)₃·9H₂O, LiNO₃, and Al(NO₃)₃ were added into the 15 wt% citric acid aqueous solution at a molar ratio of 1:4.98:0.01, mixed thoroughly, and then crushed after a spray-dry at 280°C. In a nitrogen atmosphere, the temperature was raised to 850°C at a rate of 300°C/hr and maintained for 15 hrs. After cooling, the product was mechanically crushed and classified. Further, the in-situ carbon-coated LiFe0₂·1.99Li₂O·0.005Al₂O₃ powder, after being mixed with the 10 wt% PP, place it in a rotary furnace with N₂ protection, and heat it up to 400°C at a heating rate of 200°C/h and keep it for 1h, to obtain the Polypropylene & carbon composite coated LiFeO₂·1.99Li₂O·0.005Al₂O₃ powder as the cathode lithium-supplementing additive.

### Comparative Example A1

A cathode lithium-supplementing additive and a preparation method therefor.

The cathode lithium-supplementing additive includes a lithium-containing core and an encapsulation layer covering a surface of the lithium-containing core, where the lithium-containing core is LiFeO₂·1.99Li₂O, and the encapsulation layer material includes a conductive carbon material. The D₅₀ of the lithium-containing core is 10 µm, and the thickness of the encapsulation layer is 50 nm.

The preparation method for the cathode lithium-supplementing additive includes the following steps:
Fe(NO₃)₃·9H₂O and LiNO₃ were added into the 15 wt% PVP aqueous solution at a molar ratio of 1:4.98, mixed thoroughly, and then crushed after a spray dry at 280°C. In an air atmosphere, the temperature was raised to 850°C at a rate of 300°C/hr and maintained for 15 hrs. After cooling, the product was mechanically crushed and classified to obtain tar & carbon-coated LiFe0₂·1.99Li₂O powder. The temperature was raised to 700°C under vacuum and maintained for 0.5 hrs, and then the tar is removed, to finally obtain an additive having a lithium-containing core and an encapsulation layer formed of a conductive carbon material coated on the lithium-containing core.

### Comparative Example A2

A cathode lithium-supplementing additive and a preparation method therefor.

The cathode lithium-supplementing additive includes a lithium-containing core and an encapsulation layer covering a surface of the lithium-containing core, where the lithium-containing core is LiFeO₂·1.99Li₂O·0.01CuO, and the material of the encapsulation layer includes a conductive carbon material. The D₅₀ of the lithium-containing core is 10 µm, and the thickness of the encapsulation layer is 50 nm.

The preparation method for the cathode lithium-supplementing additive includes the following steps:
Fe₂O₃, LiOH, and CuO were mixed thoroughly at a molar ratio of 1:10.1:0.01. In a nitrogen atmosphere, the temperature was raised to 900°C at a rate of 300°C/hr and maintained for 20 hrs. After cooling, the product was mechanically crushed and classified to obtain LiFeO₂·2.025Li₂O·0.01CuO powder. The powder obtained by crushing was placed in a rotary furnace with N₂ being provided for protection, the temperature was raised to 700°C at a heating rate of 200°C/hr, and after a heat treatment with a carbon source, the temperature was lowered and cooled down to obtain tar & carbon-coated LiFeO₂·1.99Li₂O·0.01CuO powder. The temperature was then raised to 650°C under vacuum and held for 0.5 hrs to remove the tar, and finally, an additive having a lithium-containing core and an encapsulation layer formed of a conductive carbon material coated on the lithium-containing core is obtained.

### Example B1

Preparations of a cathode sheet and a lithium secondary battery.

The cathode lithium-supplementing additive obtained in Example A1 was mixed with polyvinylidene fluoride and SP-Li at a mass ratio of 93:3:4 and then the resulting mixture was ball milled to obtain a cathode slurry. The cathode slurry was coated on a surface of the aluminum foil, to be rolled and then dried under vacuum at 110°C overnight to obtain the cathode sheet.

Ethylene carbonate and ethyl methyl carbonate were mixed at a volume ratio of 3:7, and then LiPF₆ was added into the mixture to form an electrolyte. The concentration of LiPF₆ is 1 mol/L. The cathode sheet, a polypropylene microporous separator, a lithium sheet and the electrolyte were assembled to obtain the lithium secondary battery.

The methods for preparing the cathode sheets and lithium secondary batteries of Examples B2 to Example B8 are exactly the same as those of Example B1, except that "the cathode lithium-supplementing additive obtained in Example A1" is replaced with " the corresponding cathode lithium-supplementing additive obtained in Example A2 to Example A8".

The methods for preparing the cathode sheets and lithium secondary batteries of Comparative Example A1 to Comparative Example A2 are exactly the same as those of Example B1, except that "the cathode lithium-supplementing additive obtained in Example A1" is replaced with "the corresponding cathode lithium-supplementing additive obtained in Comparative Example A1 to Comparative Example A2" ".

### Performance Testing

1. The scanning electron microscope is used to characterize the morphology of the cathode lithium-supplementing additives of Example A1, Example A5 and Comparative Example A1.
2. The X-ray diffraction is used to characterize the morphology of the cathode lithium-supplementing additives of Example A1 and Example A5.
3. The doping element M and tar amount of the cathode lithium-supplementing additives of Examples A1 to A8 and Comparative Examples A1 to A2, and the initial charge capacity of the secondary batteries of Examples B1 to B8 and Comparative Examples B1 to B2 were tested

Among them, the content of the doping element M in the cathode lithium-supplementing additives of Examples A1 to A8 and Comparative Examples A1 to A2 was analyzed using inductively coupled plasma (Inductively Coupled Plasma, ICP) luminescence spectrometry.

The amount of tar may be tested by TPD-MS (temperature programmed desorption-mass spectrometry), which particularly includes that: the 100 mg sample was put into a silica sample cell, under He of 50 ml/min, the temperature was raised from room temperature to 1000°C at a rate of 10°C/min. Then, the generated gas was analyzed using mass spectrometry.

The initial charge capacity was tested for electrochemical performance. The test conditions are that: the assembled battery was placed at room temperature for 24 hrs and then perform a charge and discharge test. The charge or discharge voltage was 2.7V-4.3V

### Analysis of results

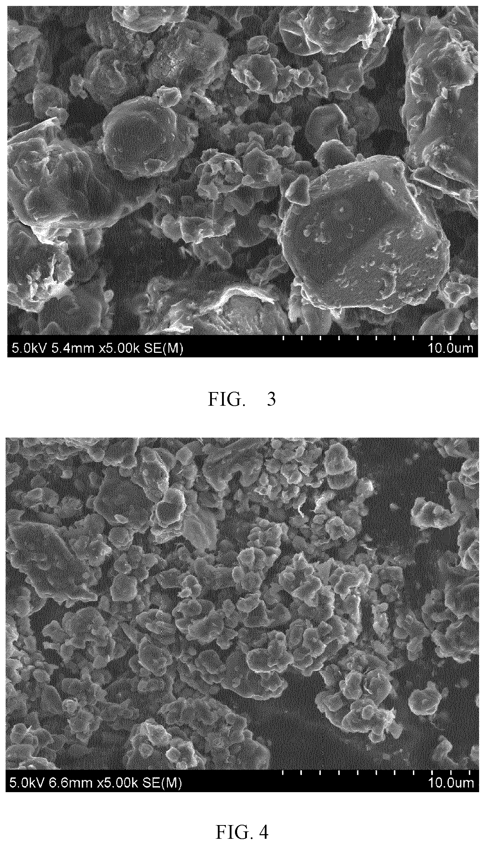

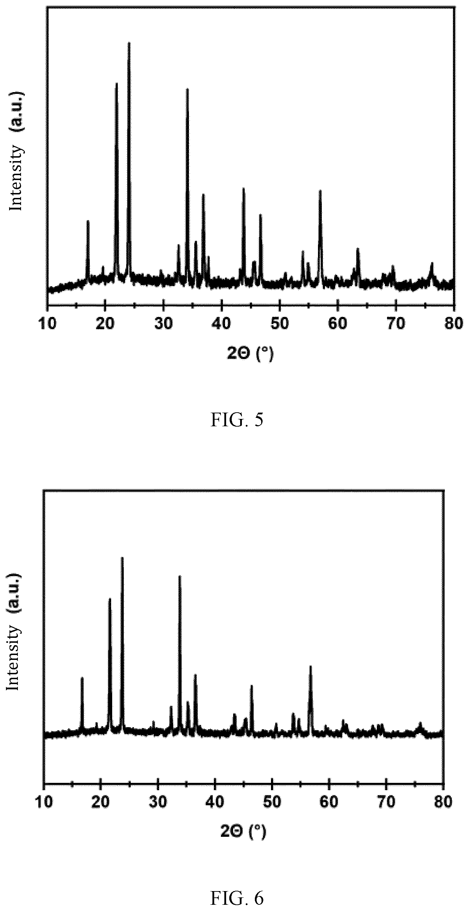

1. The morphology of the cathode lithium-supplementing additives of Example A1, Example A5 and Comparative Example A1 were characterized by using the scanning electron microscopy. The results are analyzed as follows:
   The results are shown in FIGS. 2, 3 and 4. Among them, FIG. 2 is a scanning electron microscope image of the cathode lithium-supplementing additive provided in Example A1 of the present application, and FIG. 3 is a scanning electron microscope image of the cathode lithium-supplementing additive provided in Example A2 of the present application. FIG. 4 is a scanning electron microscope image of a rich cathode lithium-supplementing additive provided in Comparative Example A1 of the present application. It can be seen from FIG. 2 that the cathode lithium-supplementing additive of Example A1 has more irregular particles and a relatively rough interface. It can be seen from FIG. 3 that the surface of the cathode lithium-supplementing additive of Example A5 is relatively smooth. It can be seen from FIG. 4 that the interface of the lithium-rich iron-based composite material without additive coating in Comparative Example A1 is also relatively rough.
2. The morphology of the cathode lithium-supplementing additives of Example A1 and Example A5 were characterized by using X-ray diffraction. The results are analyzed as follows:
   The cathode lithium-supplementing additives of Example A1 and Example A5 were characterized by X-ray diffraction. The results are shown in FIGS. 5 and 6. Among them, FIG. 5 is an X-ray diffraction pattern of the cathode lithium-supplementing additive provided in Example A1 of the present application. FIG. 6 is an X-ray diffraction pattern of the cathode lithium-supplementing additive provided in Example A5 of the present application. It can be seen from FIG. 5 that the lithium-rich iron-based composite material has a main peak of Li₅FeO₄ and some diffraction peaks of LiFeO₂. It can be seen from FIG. 6 that the lithium-rich iron-based composite material is mainly Li₅FeO₄ and less LiFeO₂.
3. The doping element M and tar amount of the cathode lithium-supplementing additives of Examples A1 to A6 and Comparative Examples A1 to A2, and the initial charge capacity of the secondary batteries of Examples B1 to B8 and Comparative Examples B 1 to B2 were tested. The results are analyzed as follows:
   The test results are shown in Table 1. The y value of the doping element M in Table 1 is the content of the doping element M in the lithium-supplementing additive. It can be seen from Table 1 that, for each lithium-rich iron-based composite material coated with carbon in Examples 1-8 of the present application, the prepared cathode slurry does not have a jelly phenomenon and is prone to coat. When the lithium-supplementing additive is added into a lithium secondary battery, the cathode can have a higher initial charge capacity and a lower initial efficiency, thereby compensating for the reduction in energy density caused by the irreversible loss of lithium in the anode for the first time. It can be seen from the experiments of Comparative Examples that, for each lithium-rich iron-based composite material without being coated in Comparative Examples 1 and 2, the formation of jelly is caused by water absorption during the preparation process of the cathode slurry, which is not conducive to the coating of the cathode slurry.

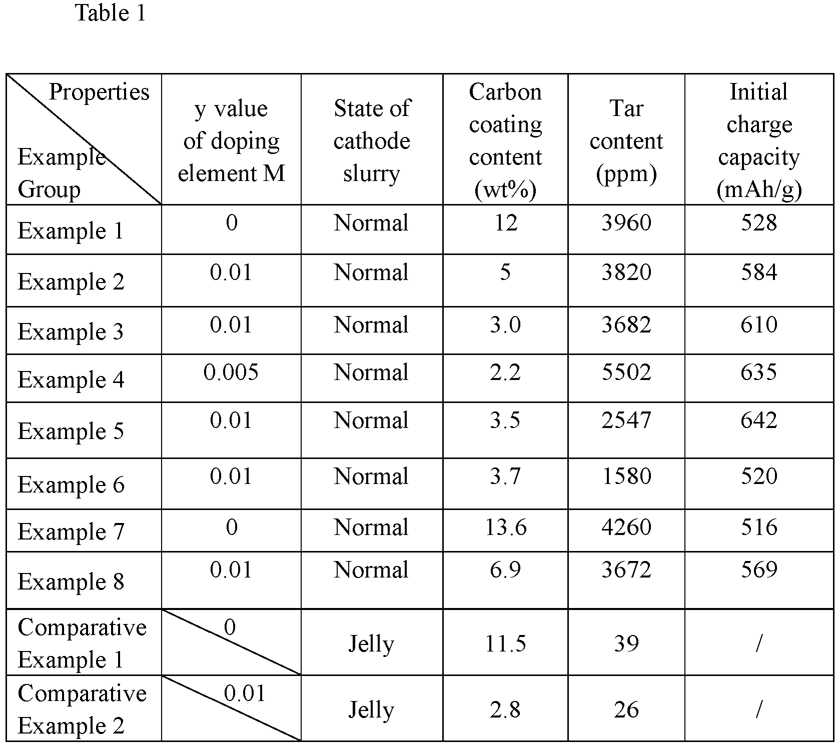

The above are merely optional embodiments of the present application and are not intended to limit the present application. Various modifications and variations may be made to the present application by those skilled in the art. Any modifications, equivalent substitutions, improvements, etc. made within the spirit and principles of the present application shall be included in the scope of the claims of the present application.

## Claims

1. A cathode lithium-supplementing additive, **characterized in that** the cathode lithium-supplementing additive comprises a lithium-containing core and an encapsulation layer covering a surface of the lithium-containing core, the encapsulation layer has pores and/or cracks and a sealing agent distributed at least at the pores and/or cracks for blocking the pores and/or cracks; wherein a material of the sealing agent comprises an organic hydrophobic material.

2. The cathode lithium-supplementing additive according to claim 1, **characterized in that**, during a use of the cathode lithium-supplementing additive, at least part of the sealing agent is prolapsed from the pores and/or cracks of the encapsulation layer.

3. The cathode lithium-supplementing additive according to claim 1, **characterized in that**, when the cathode lithium-supplementing additive is added to a battery for use, the battery generates gas during a charging or discharging process, and the gas enables at least part of the sealing agent to be prolapsed from the pores and/or cracks of the encapsulation layer, causing the pores and/or cracks of the encapsulation layer to reopen.

4. The cathode lithium-supplementing additive according to claim 1, **characterized in that**, the organic hydrophobic material comprises at least one of tar, polyethylene, and polypropylene; and/or,
a material of the encapsulation layer comprises a conductive hydrophobic material.

5. The cathode lithium-supplementing additive according to claim 4, **characterized in that**, the tar comprises at least one of xylene, phenanthrene, anthracene, pyrene, benzopyrene, and benzopyrene-free; and/or,
the conductive hydrophobic material comprises a conductive carbon material.

6. The cathode lithium-supplementing additive according to claim 1, **characterized in that**, a mass ratio of the lithium-containing core and the encapsulation layer is in a range of 95~99:1~5; and/or,
in the encapsulation layer, a mass content of the sealing agent is 100 to 6000 ppm.

7. The cathode lithium-supplementing additive according to claim 1, **characterized in that**, a material of the lithium-containing core comprises LiₓM_{y}O_{z}, wherein 0 < x ≤6, 0 < y ≤3, 0 < z ≤4, and M comprises at least one of Fe, Co, Ni, Mn, V, Cu, Mo, Al, Ti, Mg, and Zr.

8. The cathode lithium-supplementing additive according to claim 7, **characterized in that**, the material of the lithium-containing core comprises a lithium-rich iron-based composite material, and the lithium-rich iron-based composite material comprises aLiFeO₂.bLi₂O.cNₓO_{y}, wherein, a+b ≥ 0.98, c ≤ 0.02, 1.8 ≤ b/a ≤2.1, a, b, c are mole numbers; 1 ≤ y/x ≤ 2.5; and N comprises at least one of Ni, Co, Mn, T, Al, Cu, V, and Zr.

9. The cathode lithium-supplementing additive according to claim 1, **characterized in that**, the lithium-containing core satisfies conditions of: 1 µm ≤ D₅₀ ≤ 10 µm, D₁₀/D₅₀ ≥ 0.3, D₉₀/D₅₀ ≤ 2; and/or,
a specific surface area of the lithium-containing core is in a range of 0.5~20 m²/g; and/or,
a thickness of the encapsulation layer is in a range of 5~100 nm.

10. The cathode lithium-supplementing additive according to claim 1, **characterized in that**, a powder resistivity of the cathode lithium-supplementing additive is in a range of 1.0~500 Ω/cm.

11. A preparation method for a cathode lithium-supplementing additive, **characterized by** comprising the following steps:
providing lithium-containing core material particles, an encapsulation layer material precursor and a sealing agent material precursor respectively according to the cathode lithium-supplementing additive of claim 1;
preparing a precursor, in an inert atmosphere, by using the encapsulation layer raw material precursor and the sealing agent material precursor to form a coating layer that is coated on the lithium-containing core material particles;
performing a post-processing on the precursor, in an inert atmosphere, to enable the coating layer to form an encapsulation layer, and the sealing agent to be distributed at least at pores and/or cracks of the encapsulation layer for blocking the pores and/or cracks, to obtain the cathode lithium-supplementing additive.

12. The preparation method for the cathode lithium-supplementing additive according to claim 11, **characterized in that**, the step of preparing the precursor comprises:
mixing, in an inert atmosphere, the lithium-containing core material particles, the encapsulation layer material precursor and the sealing agent material precursor, to be composite-coated in situ, and using the encapsulation layer raw material precursor and the sealing agent material precursor to form the coating layer that is coated on the lithium-containing core material particles; or alternatively,
providing the encapsulation layer material precursor and the sealing agent material precursor, placing the lithium-containing core material particles in an inert atmosphere, and coating the lithium-containing core material by using the encapsulation layer material precursor and the sealing agent material precursor by means of a vapor deposition method to form the coating layer that is coated on the lithium-containing core material particles.

13. The preparation method for the cathode lithium-supplementing additive according to claim 9, **characterized in that**, in the step of preparing the precursor, a preparation condition comprises: heating to 600~1000°C at a heating rate of 10~500°C/hr, and reacting for 4~48 hrs; and/or,
in the step of performing the post-processing on the precursor, a post-processing condition comprises: heating to 600-1000°C at the heating rate of 0-500°C/hr, and performing a heat treatment for 0.5-20 hrs.

14. The preparation method for the cathode lithium-supplementing additive according to claim 12, **characterized in that**, the sealing agent material precursor comprises at least one of C1 to C4 alcohols, ethers, ketones, and hydrocarbon compounds; and/or,
the encapsulation layer material precursor comprises at least one of C1 to C4 alcohols, ethers, ketones, and hydrocarbon compounds.

15. The preparation method for the cathode lithium-supplementing additive according to claim 9, **characterized in that**, the preparation method for the lithium-containing core material particles comprises: providing a lithium source and a M metal source, uniformly mixing the lithium source and the M metal source at a molar ratio according to the lithium-containing core material particles, and then performing drying and crushing to obtain the lithium-containing core material particles;
wherein, the lithium source comprises at least one of lithium hydroxide, lithium carbonate, lithium nitrate, lithium acetate, and lithium oxide; and
the M metal source comprises at least one of Fe, Co, Ni, Mn, V, Cu, Mo, Al, Ti, Mg, and Zr.

16. The preparation method for the cathode lithium-supplementing additive according to claim 15, **characterized in that**, the lithium-containing core material particles are selected from a lithium-rich iron-based composite material, and the preparation method comprises: providing an iron source, the lithium source, and the M metal source, uniformly mixing the iron source, the lithium source and the N metal source according to a molar ratio according to the lithium-containing core material particles, and then performing drying and crushing to obtain the lithium-containing core material particles;
wherein, the iron source comprises at least one of iron oxide, iron nitrate, iron chloride, iron hydroxide, iron acetate, and iron hydroxide.

17. The preparation method for the cathode lithium-supplementing additive according to claim 9, **characterized in that**, a post-processing condition comprises: heating to 600-1000°C at a heating rate of 0-500°C/hr, and performing a heat treatment for 0.5-20 hrs.

18. A cathode sheet, **characterized in that** the cathode sheet comprises a cathode current collector and a cathode active material layer located on the cathode current collector, the cathode active material layer comprises a cathode active material, a binder, a conductive agent and a cathode lithium-supplementing additive, wherein the cathode lithium-supplementing additive is selected from the cathode lithium-supplementing additive according to any one of claims 1 to 10 or is prepared by the preparation method for the cathode lithium-supplementing additive according to any one of claims 11 to 17.

19. A secondary battery, **characterized in that**, the secondary battery comprises the cathode sheet according to claim 18.

20. The secondary battery according to claim 19, **characterized in that**, the secondary battery generates gas during a charging process, and the gas enables at least part of the sealing agent of the cathode lithium-supplementing additive to be prolapsed from the pores and/or cracks of the encapsulation layer.
